(19) Europäisches Patentamt
European Patent Office
Office européen des brevets

(11) **EP 1 855 097 B1**

(12) **EUROPÄISCHE PATENTSCHRIFT**

(45) Veröffentlichungstag und Bekanntmachung des Hinweises auf die Patenterteilung:
**28.04.2010   Patentblatt 2010/17**

(51) Int Cl.:
*G01M 5/00* *(2006.01)*   *G01N 3/12* *(2006.01)*

(21) Anmeldenummer: **06010282.9**

(22) Anmeldetag: **18.05.2006**

(54) **Vorrichtung und Verfahren zur Stabilitätsprüfung von Wickelkernen**

Device and method for testing the stability of hubs

Dispositif et procédé destinés à la vérification de la stabilité de moyeux d'enroulement

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.05.2006   DE 102006022725**

(43) Veröffentlichungstag der Anmeldung:
**14.11.2007   Patentblatt 2007/46**

(73) Patentinhaber:
• **Paul & Co GmbH & Co KG**
**97772 Wildflecken (DE)**
• **H.N. Zapf KG**
**95030 Hof (DE)**

(72) Erfinder:
• **Kunert, Manfred**
**97772 Wildflecken (DE)**
• **Zapf, Karl A.**
**95028 Hof (DE)**

(74) Vertreter: **Böck, Bernhard**
**advotec.**
**Patent- und Rechtsanwälte**
**Beethovenstrasse 5**
**97080 Würzburg (DE)**

(56) Entgegenhaltungen:
**EP-A- 0 605 109      DE-A1- 2 027 727**
**FR-A- 2 641 868      US-A- 2 754 677**

**Beschreibung**

Die Erfindung betrifft eine Vorrichtung und ein Verfahren zur Stabilitätsprüfung von Wickelkernen nach den Oberbegriffen des Verfahrenshauptanspruchs und des Vorrichtungshauptanspruchs.

Bahnförmige Waren werden oft auf Rohrabschnitte aus Kunststoff oder Pappe gewickelt, welche als Wickelkerne bezeichnet werden. Diese Wickelkerne sollen dem Druck der aufgewickelten Ware sowie den Belastungen beim Auf- und Abwickeln standhalten. Dies können beispielsweise Radialspannungen und Tangentialspannungen sein.

Der Druck der aufgewickelten Ware ist eine äußere Druckbelastung. Beim Auf- und Abwickeln kommen hohe Drehzahlen, Belastung durch Fliehkraft, Resonanz, kritische Drehzahl und Ausknicken hinzu. Weiterhin kann die Art der Aufnahme der Wickelkerne in der Verarbeitungsmaschine zu weiteren Belastungen führen.

Um die Stabilität von Wickelkernen prüfen zu können, ist beispielsweise die Prüfmethode gemäß Scheiteldruckversuch bekannt. Beim Scheiteldruckversuch wird beispielsweise zumindest ein Abschnitt eines Wickelkerns zwischen Platten einer Presse zusammen gedrückt. Die Kraft wird also nicht rotationssymmetrisch auf zwei Kontaktlinien aufgebracht. Daher ist der Wickelkern beim Scheiteldruckversuch einem anderen Belastungsfall ausgesetzt als in der Realität.

In der Realität werden die Bahnen auf den Wickelkern zumeist unter Zug aufgewickelt, wodurch sich zugleich eine Tangential- sowie eine Radialspannung in der Wandung des Wickelkerns aufbaut. Diese Spannungen entstehen jedoch im Gegensatz zum Scheiteldruckversuch in der gesamten Wandung des Wickelkerns - also rotationssymmetrisch - und nicht nur an einzelnen Punkten bzw. in der Nähe einzelner Kontaktlinien.

Der Scheiteldruckversuch belastet den Rohrabschnitt erheblich auf Biegung. Die analytische Berechnung der Verbiegung gestaltet sich als schwierig, da von der allgemeinen Gleichung einer Biegelinie ausgegangen werden kann:

$$E\ I\ W'' = M$$

Das wirksame Flächenträgheitsmoment und das Biegemoment ist eine Funktion der Variablen. Die Integration führt zu nicht trivial lösbaren Integralen. Hiermit bietet sich eine FEM-Berechnung zur Darstellung der Verformung und der Spannungen an.

Der Scheiteldruckversuch hat zunächst - ein unendlich gültiges Hooksches Gesetz angekommen - den Vorteil, bereits mit geringen Lasten relativ große Verformungen zu erzeugen. Mit einer relativ schwachen Prüfeinrichtung lässt sich so ein großer Bereich an Prüflingen untersuchen.

Bei Kunststoffen allerdings wird der linear Bereich des Hookschen Gesetzes sehr schnell verlassen. Damit nehmen die Verformungen rasch zu. Damit haben Geometrie- oder Materialänderungen nur geringen Einfluss auf den Verlauf der Kraft/Verformuungskurve, da diese Kurve hauptsächlich durch die erreichte Fließspannung bestimmt ist. Weiterhin ergibt der Scheiteldruckversuch für Wickelkerne keine sinnvoll e Aussage, da die durch ihn dargestellte Belastung erheblich von der Last beim Wickeln abweicht.

Aus dem Stand der Technik verweist die US 2 754 677 auf ein Verfahren zum zerstörungsfreien Testen von Hohlkörpern, wie z.B. Druckkessel, Druckrohrleitungen, U-Boot- und Flugzeug-Rümpfe und dergleichen. Nachdem der Hohlkörper in eine Druckkammer gebracht und mit einem Füllfluorid, wie z.B. Wasser gefüllt wurde, wird in der Druckkammer mit einem Druckfluid ein von außen auf den Hohlkörper einwirkender Außendruck aufgebaut, der kontinuierlich gesteigert wird. Dabei wird der im Inneren des Hohlkörpers herrschende Innendruck wiederholt mit dem Außendruck verglichen. Wenn die Differenz zwischen dem Außen- und dem Innendruck einen konstanten Wert erreicht, was das Einsetzen einer Verbeulung anzeigt, wird die Erhöhung des Außendrucks beendet.

Ferner offenbart die FR 2 641 868 eine Vorrichtung zum Messen des mechanischen Verhaltens einer Gesteinsprobe unter Druck. Die Vorrichtung umfasst einen Prüfraum, in den die Probe eingebracht wird. Beim Messverfahren wird eine Flüssigkeit durch den Prüfraum zirkuliert.

Die EP 0 605 109 A1 beschreibt dazu eine Vorrichtung zur Bestimmung der Druckfestigkeit des Materials von rohrförmigen Produkten. Die Vorrichtung umfasst ein Gehäuse, das einen Hohlraum definiert. Im Hohlraum ist ein Blasenmittel montiert, das eine zylindrische Druckkammer definiert. Zwischen dem Blasenmittel und dem Gehäuse ist ein Flüssigkeit aufnehmender Raum gebildet. Das zu prüfende rohrförmige Teil wird in die Druckkammer eingebracht und anschließend wird der Innenraum zwischen dem rohrförmigen Teil und dem Blasenmittel mit Kügelchen gefüllt. Durch Füllen des Flüssigkeit aufnehmenden Raums mit Flüssigkeit wird das Blasenmittel von außen unter Druck gesetzt, um Druck auf die Kügelchen auszuüben, die ihrerseits gleichmäßigen Druck über die gesamte Oberfläche des zu prüfenden rohrförmigen Teils ausüben.

Ferner zeigt die DE 2 027 727 ein Verfahren zum Messen der Festigkeiten von verformbaren Körpern, wie z.B. Gießereiformstoffen. Der Prüfkörper wird zwischen zwei Platten eingespannt und die Platten werden mit geringer Geschwindigkeit aufeinander zu bewegt. Der Prüfkörper wird dabei gestaucht und der sich mit zunehmendem Verstauchungsgrad ändernde Verformungswiderstand des Prüfkörpers wird aufgezeichnet. Dabei wird der während der Stauchung auf die Platten ausgeübte Druck fortlaufend auf eine Druckmessdose und von dieser die erhaltenen Werte auf einen Schreiber übertragen.

Die bekannten Prüfverfahren sind nicht geeignet, die Belastung durch die aufgewickelte Ware sinnvoll anzunähern und an Hand von Wickelkern-Prüfkörpern die Beurteilung der Betriebsfestigkeit zu erlauben. Die Annäherung an die reale Belastung ist deutlich unbrauchbar.

Aufgabe der vorliegenden Erfindung ist es, eine neue Vorrichtung zur Stabilitätsprüfung von Wickelkernen und ein neues Verfahren zur Stabilitätsprüfung von Wickelkernen vorzuschlagen.

Diese Aufgabe wird durch die vorliegende Erfindung nach der Lehre des Vörrichtungshauptanspruchs und des Verfahrenshauptanspruchs gelöst.

Vorteilhafte Ausführungsformen sind Gegenstand der Unteransprüche.

Erfindungsgemäß wird das Problem dadurch gelöst, dass die Vorrichtung zur Stabilitätsprüfung von Wickelkernen einen druckdichten Druckbehälter aufweist, wobei im Inneren des Druckbehälters ein unter Druck setzbares Druckmedium eingebracht werden kann, und wobei die Vorrichtung eine Druckmesseinheit zur Bestimmung des Innendrucks des Druckbehälters aufweist, und wobei in den Druckbehälter zumindest ein Abschnitt des zu prüfenden Wickelkerns eingebracht werden kann, und wobei der sich im Druckbehälter befindliche Außenbereich des Wickelkerns relativ zum Innenbereich des Wickelkerns mittels des Druckmediums flächig unter Druck gesetzt werden kann, und wobei die Vorrichtung eine Verformungsmesseinheit zur Bestimmung der Verformung des zu prüfenden Wickelkerns aufweist.

Die erfindungsgemäße Vorrichtung kann grundsätzlich zur Prüfung beliebiger Stabilität von Wickelkernen Verwendung finden. Derartige Stabilität kann beispielsweise die oben beschriebene Tangential- bzw. Radialspannung betreffen. Besondere Aufmerksamkeit soll dabei der Festigkeit des Wickelkerns gegenüber Druckbelastungen in radialer und/oder tangentialer Richtung zukommen. Derartige Belastungen können beispielsweise bei Lagerung aufgewickelter Wickelkerne entstehen, da die Bahnen auf den Wickelkern unter Zugspannung aufgewickelt wurden. Beispiele für Wickelgut sind Textil, Kunststoff und/oder Papier.

Die Ausführung des Druckbehälters ist grundsätzlich beliebig. Ein Abschnitt des zu prüfenden Wickelkerns kann in den Druckbehälter eingebracht werden. Dabei ist zunächst beliebig, ob der Druckbehälter in geschlossenem Zustand eine Ausnehmung aufweist, in die der Wickelkern eingebracht werden kann und, beispielsweise durch Membrankontakt, unter Druck gesetzt werden kann, oder, ob der Wickelkern abschnittsweise in das Innere des Druckbehälters eingebracht werden kann.

Die Ausführungsform der Druckmesseinheit ist ebenfalls grundsätzlich beliebig. Vorteilhafterweise ist diese als Drucksensor ausgestaltet und im Inneren des Druckbehälters mit Kontakt zum Druckmedium angeordnet.

Der sich im Druckbehälter befindliche Außenbereich des Wickelkerns wird relativ zum Innenbereich des Wickelkerns mittels des Druckmediums flächig unter Druck gesetzt. Die Art und Weise der Druckerzeugung ist dabei grundsätzlich beliebig.

In einer besonders vorteilhaften Ausführungsform wird das Druckmedium unter Druck gesetzt, wobei der Druck über die Druckmesseinheit überwacht und/oder bestimmt werden kann. Das Druckmedium steht in flächigem Kontakt mit dem Außenbereich des Wickelkerns. Somit lässt sich der Druck auf diese Kontaktflächen an den Außenbereich des Wickelkerns übertragen.

Grundsätzlich ist auch ein festes Druckmedium, wie beispielsweise Druckstempel mit flächigem Kontakt zum Wickelkern denkbar.

Der Kontakt zwischen Druckmedium und Wickelkern hat erfindungsgemäß flächig zu sein. Dadurch lassen sich nämlich die oben genannten Nachteile vermeiden und entsprechende Vorteile herbeiführen. Die flächige Druckbeaufschlagung des Außenbereichs des Wickelkerns kommt nämlich im Gegensatz zur im Wesentlichen punktuellen Druckbeaufschlagung beim Scheiteldruckversuch der Druckbelastung des Wickelkerns in der Realität wesentlich näher. Flächig kann in diesem Zusammenhang bedeuten, dass die Druckbeaufschlagung an einer etwas größeren Fläche als beim Scheiteldruckversuch erfolgt, wobei sich die Fläche nicht notwendigerweise um den gesamten Umfang des Wickelkerns erstrecken muss. Vorteilhafterweise, insbesondere bei Verwendung eines fluiden Druckmediums, erstreckt sich die Kontaktfläche zwischen Druckmedium und Wickelkern um den gesamten Umfang des Wickelkerns. Entscheidend bei der Wahl des Ausmaßes der flächigen Druckaufbringung ist der gewünschte Grad an Übereinstimmung der Situation während der Stabilitätsprüfung mit der realistischen Druckbelastung des Wickelkerns.

Der absolute Druck im Inneren des Wickelkerns ist grundsätzlich beliebig. Einzige Bedingung ist, dass der Druck im Innenbereich des Wickelkerns geringer ist als der Druck im Außenbereich des Wickelkerns. Vorteilhafterweise herrseht im Innenbereich des Wickelkerns Atmosphärendruck.

Die Abmessungen der Prüfvorrichtung sind grundsätzlich beliebig. In einer besonders vorteilhaften Ausführungsform kann die Prüfvorrichtung beispielsweise für Wickelkern-Prüfkörper mit maximalem Außendurchmesser von 250 mm bis minimalem Innendurchmesser von 50 mm bei einer Prüfkörperlänge von 450 mm ausgelegt sein.

Denkbar sind auch zwei Aufnahmen für Wickelkern-Prüfkörper. Dabei könnte eine Aufnahme zur Aufnahme eines Wickelkern-Prüfkörpers mit maximalem Außendurchmesser von 125 mm und einem minimalen Innendurchmesser von 50 mm bei einer Prüfkörperlänge von 250 mm ausgelegt sein, und die zweite Aufnahme zur Aufnahme eines Wickelkern-Prüfkörpers mit einem maximalen Außendurchmesser von 250 mm und einem minimalen Innendurchmesser von 100 mm bei einer Prüfkörperlänge von 450 mm ausgelegt sein.

In der Realität wird, wie eingangs beschrieben, das Wickelgut unter Spannung auf den Wickelkern aufgewickelt. Dadurch wird bezüglich des Wickelkerns eine umlaufende, gleichmäßige Tangentialspannung erzeugt. Betrachtet man diese Tangentialspannung an einem kleinen, freigeschnittenen Element des Wickelguts, stellt man fest, dass die Schnittflächen in einem Winkel zueinander stehen. Folglich greift an diesem freigeschnittcncn Element auch eine radiale Kraftkomponente an. Diese Komponente stellt eine Außendruckbelastung für den Wickelkern dar.

Allgemein gibt es für ein auf Außendruck belastetes Rohr geschlossene Lösungen für die Berechnung der Durchmesserändcrung und Spannungen, die in entsprechender Fachliteratur nachgeschlagen werden kann:

$$\Delta d = -2 \cdot r \cdot \frac{p}{E} \cdot \frac{R^2}{R^2 - r^2} \cdot \left\{ \frac{r^2}{R^2} \cdot (1 + \mu) + 1 - \mu \right\}$$

Für kunststoffrelevante Werte mit E = 3000 N/mm², $\mu$ = 0,34; R=44; r=38 ergibt sich eine Verringerung des Durchmessers um 0,16 mm. Auch hier geht der Druck linear in die Gleichung ein. Es ergibt sich ein rotationssymmetrischer Spannungszustand, bei dem gilt:

Radialspannung:

$$\sigma_r = -p \cdot \frac{R^2}{R^2 - r^2} \cdot [1 - \frac{r^2}{x^2}]$$

Tangentialspannung:

$$\sigma_t = -p \cdot \frac{R^2}{R^2 - r^2} \cdot [1 + \frac{r^2}{x^2}]$$

wobei
R Außenradius
r Innenradius
x aktuelle Radiusvariable
p Außendruck

Die Gleichungen zeigen die Grenzfälle:

Für x = r ist $\sigma r$ = 0 und $\sigma t$ = -2p*(R²/(R²-r²)) =
Für x = R ist $\sigma r$ = -p und $\sigma t$ = -p*(R²+r²)/(R²-r²)

Setzt man die Beispielwerte ein, so errechnet man:

Für x = r ist $\sigma r$ = 0 und $\sigma t$ = - 7.87 N/mm²

Für x = R ist $\sigma r$ = -1 N/mm² und $\sigma t$ = - 6.87 N/mm²

Der rotationssymmetrische Spannungszustand führt zu einer rotationssymmetrischen Verformung sodass der Durchmesser des Rohrs abnimmt.

Die Belastung mit Außendruck ist analytisch geschlossen lösbar. Die Belastung des Wickelkerns durch das Wickelgut, welches wie eine den Wickelkern umschlingende Feder wirkt, entspricht etwa dem Außendruck, stellt nämlich eine Tangentialspannung dar, die nur durch eine passende Radialspannung (=Außendruck) entstehen kann. Insofern wäre keine Prüfeinrichtung für den Außendruck notwendig, da die Berechnung trivial erscheint.

Allerdings ist in der Formel der Verformung unter Außendruck das E-Modul des Prüfkörpers enthalten. Gerade das E-Modul eines Kunststoffes unter Druckbelastung ist oft nicht bekannt und weicht manchmal vom E-Modul unter einachsigem Zug ab. Der E-Modul ist insbesondere deshalb im Detail nicht bekannt, da er durch Verarbeitungsbedingungen (Faserorientierung, Schmelzefluss) beeinflusst werden kann. Weiterhin verhalten sieb Kunststoffe nur in einem geringen Verformungsbereich linearelastisch, wie es die Formel voraussetzt. In vielen Fällen verlässt die Anwendung diesen Bereich. Insofern müsste die Spannungs-Dehnungs-(oder die Kraft-Verformungs-)Kurve eines speziellen Prüflings jeweils bestimmt werden und deren Werte in die Formel einfließen.

Da für eine Bauteilprüfung wie oben dargestellt ohnehin die Spannungs-Dehnungs-Kurve bestimmt werden müsste, um die Abhängigkeit des E-Moduls von der Verformung zu berücksichtigen, könnte gleich ein Prüfkörper mit der Geometrie des Bauteils geprüft werden.

Die Prüfvorrichtung stellt die Belastung durch das Wickelgut nach, indem beispielsweise ein hydraulischer Druck von außen auf zumindest einen Abschnitt des Wickelkern-Prüfkörpers aufgebracht wird. Durch die radialsymmetrische Belastung treten bis zu einem weiten Bereich keine Biegespannungen auf, erst unmittelbar beim Versagen des Bauteils führen lokale Ausbeulungen (die auch durch Wanddickenunterschiede verstärkt werden können) solche Spannungen hervor.

Ein weiterer Vorteil der Prüfvorrichtung liegt darin, dass die Verformungen sich über einen weiten Bereich linear verhalten, da die erzeugten Spannungen in einem weiten Bereich keine lokalen Überschreitungen der Fließgrenze haben. Insofern verhalten sich die Ergebnisse der Prüfvorrichtung im Wesentlichen ähnlich der Belastung durch Wickelgut.

Die Länge des Wickelkern-Prüfkörpers müsste mindestens so lang sein, dass durch seine Befestigung an der Prüfvorrichtung und eine dadurch an den Befestigungsstellen bewirkte Stabilisierung, die beispielsweise bei einer freistchenden Lagerung nicht vorkommt, Messungen nicht verfälscht werden und der Einfluss dieser Stabilisierung an den Befestigungsstellen gering gehalten wird.

Der Druck im Inneren des Druckbehälters wird mittels des Druckmediums aufgebaut. Die Wahl des Druckmediums ist grundsätzlich beliebig. In einer vorteilhaften Ausführungsform weist das Druckmedium zumindest ein Fluid auf. Es kann beispielsweise ein flüssiges und/oder gasförmiges Druckmedium zum Einsatz kommen. Besonders vorteilhaft ist die Verwendung von Wasser als Druckmedium.

Die Prüfvorrichtung weist einen Druckbehälter auf, welcher hohe Drücke ertragen können muss, die zur Prüfung der Wickelkerne erforderlich sind. Der Druckbehälter sollte sicher gegen den Prüfdruck bestehen können und zumindest gegen das Druckmedium dicht sein. Weiterhin ist es vorteilhaft, den Druckbehälter zumindest bezüglich des Druckmediums korrosionsbeständig auszubilden.

Das Druckmedium kann eine Flüssigkeit sein, welche beim Versagen des Prüflings zu einem sofortigen Druckabfall ohne explosionsartige Effekte führt (im Gegensatz dazu wäre ein gasförmiges Prüfmedium eventuell gefährlich). In einer Ausführungsform der Prüfvorrichtung wird als Druckmedium Wasser verwendet, die Drücke reichen in diesem Beispiel bis 100 bar.

In einer weiteren vorteilhaften Ausführungsform kann die Vorrichtung zumindest einen Temperatursensor zur Bestimmung der Temperatur des Druckmediums aufweisen. Der Druck eines Druckmediums kann nämlich von seiner Temperatur abhängig sein. Mittels des Temperatursensors kann somit beispielsweise eine korrekte Prüfbedingung oder indirekt der Druck überwacht werden.

Weiterhin weist die Vorrichtung eine Verformungsmesseinheit zur Bestimmung der Verformung des zu prüfenden Wickelkerns auf. Die Ausführungsform der Verformungsmesseinheit ist grundsätzlich beliebig. In einer besonders vorteilhaften Ausführungsform ist die Verformungsmesseinheit zur Bestimmung des Durchmessers und/oder zur Bestimmung einer Veränderung des Durchmessers an zumindest einer Stelle im Wickelkern geeignet. Mittels der Verformungsmesseinheit kann vorteilhafterweise der Innendurchmesser des Wickelkerns bestimmt werden. Dabei ist die Art und Weise der Bestimmung der Verformung des Wickelkerns ebenfalls grundsätzlich beliebig. In einer besonders vorteilhaften Ausführungsform wird der Innendurchmesser des Wickelkerns mit einem Messaufnehmer, insbesondere einem Messtaster, überwacht und bestimmt. Es ist dabei grundsätzlich beliebig ob es sich um einen mechanischen oder elektronischen Messaufnehmer handelt. Denkbar wäre aber auch eine lasergestützte Messeinheit. Im Wesentlichen wird die Veränderung des Innendurchmessers des Wickelkerns aufgenommen. Ebenfalls grundsätzlich beliebig ist es, ob die Überwachung der Verformung kontinuierlich oder zu diskreten Zeitpunkten erfolgt.

In einer weiteren vorteilhaften Ausführungsform ist die Verformungsmesseinheit zur Bestimmung der Verformung mittelbar oder unmittelbar über eine Längenänderung des Wickelkerns in seiner axialen Richtung geeignet. Eine derartige Längenänderung kann beispielsweise durch eine Druckbeaufschlagung des Wickelkerns entstehen.

Eine Messung der Veränderung des Innendurchmessers durch beispielsweise Zweipunktmessung erfolgt in einer vorteilhaften Ausführungsform mit einer Genauigkeit von mehr als 0,05 mm.

Die Verformungsmesseinheit kann vorteilhafterweise zentriert oder selbstzentrierend ausgestaltet sein. Weiterhin kann die Verformungsmesseinheit durch einfachen Umbau an unterschiedliche Innendurchmesser anpassbar sein.

In einer weiteren vorteilhaften Ausführungsform ist die Verformungsmesseinheit um 0 bis 180 Grad drehbar. Dadurch kann die Bestimmung der Verformung über mehrere in ihrem Winkel verschiedene Durchmesser an einer Stelle des Wickelkerns überprüft werden. Dies kommt der Überprüfung des Querschnitts des Wickelkerns auf Vorliegen einer Kreisform nahe.

Die Prüfvorrichtung kann zur Messdatenerfassung eine elektronische Ausrüstung besitzen, welche die Verformung des Prüfkörpers, den aktuellen Druck und die Temperatur aufzeichnet.

Ebenfalls beliebig ist es, ob die Verformung an einer Stelle im Wickelkern oder an mehreren Stellen im Wickelkern bestimmt wird. Beispielsweise kann mit einer Vielzahl von Messtastern die Verformung gemessen werden. Weiterhin kann auch über ein Laser-Spiegelsystem die Verformung überwacht werden.

Die Verbindung zwischen Druckbehälter und Wickelkern ist grundsätzlich beliebig. In einer besonders vorteilhaften Ausführungsform ist der Druckbehälter in Form eines mit einer zylindrischen Ausnehmung versehenen Hohlzylinders ausgebildet, wobei zumindest ein Abschnitt des Wickelkerns in die zylindrische Ausnehmung eingebracht werden kann, und wobei der Außenbereich zumindest eines Abschnitts des Wickelkerns die innere Begrenzung des Druckbehälters bildet. Besonders vorteilhaft ist diese Ausführungsform aufgrund ihrer konzentrischen Mittelpunkte von Wickelkern und Druckbehälter, so dass sich der Außenbereich des Wickelkerns und die innere Wandung des Zylindermantels berühren oder zusammenfallen.

Dadurch kann beispielsweise der Druckbehälter in Form eines hohlen Zylindermantels ausgebildet werden und über den Wickelkern - bzw. der Wickelkern in den hohlen Zylindermantel hinein - geschoben werden. Dadurch ergibt sich eine Kontaktfläche zwischen äußerer Wickelkernwandung und der inneren Zylindermantelwandung des Druckbehälters. Über diese Verbindung kann der Druck auf den Außenbereich des Wickelkerns aufgebracht werden. Die genaue Ausführung der Verbindung ist grundsätzlich beliebig. Sie kann beispielsweise über eine Membran erfolgen, oder die Wandung des Wickelkerns bildet die innere Wandung des Druckbehälters.

Der zu prüfende Wickelkern kann vollständig oder lediglich mit einem Abschnitt in den Druckbehälter eingebracht werden. Dabei ist es denkbar, den Druckbehälter vollständig nach außen hin geschlossen auszugestalten oder in einer anderen Variante mit Öffnungen bzw. Ausnehmungen oder Durchführungen zur Durchführung der übrigen Abschnitte des Wickelkerns auszustatten.

Die Ausführungsform des druckdichten Druckbehälters ist grundsätzlich beliebig. Er sollte geeignet sein, zumindest einen Abschnitt des Wickelkerns aufzunehmen. Eventuell erforderliche Durchführungen des Wickelkerns durch die Wandung des Druckbehälters sind vorteilhafterweise ebenfalls druckdicht ausgestaltet.

In einer weiteren vorteilhaften Ausführungsform ist der Wickelkern zumindest an einer Seite in axialer Richtung beweglich an der Vorrichtung gelagert. Somit können Längenänderungen des Wickelkerns ungehindert erfolgen und ggf. gemessen werden. Somit würde im mittleren Abschnitt des Wickelkerns fast ausschließlich die Belastung durch Außendruck wirksam und die Verhältnisse eines real belasteten Wickelkerns nachgestellt. Die Vorrichtung übt dabei keine Kraft in axialer Richtung auf den Wickelkern-Prüfkörper aus. Dies ist ein weiterer wesentlicher Vorteil gegenüber dem Scheiteldruckversuch. Der Druckbehälter sollte dabei trotzdem dicht bleiben, beispielsweise über geeignete Dichtungen verfügen.

In einer weiteren Ausführungsform befindet sich der Wickelkern-Prüfkörper im Inneren der Prüfvorrichtung auf zwei abdichtenden Dornen aufgesteckt. Die Länge des Wickelkern-Prüfkörpers ist so bemessen, dass die Einflüsse der Dorne in der Mitte des Prüfkörpers über einen gewissen Bereich nicht mehr wirksam oder vernachlässigbar sind.

Das erfindungsgemäße Verfahren zur Stabilitätsprüfung von Wickelkernen löst das Problem dadurch, dass es zumindest folgende Schritte aufweist:

- flächiges Aufbringen eines relativen Außendruckes zumindest auf einen Abschnitt des Außenbereichs des zu prüfenden Wickelkerns mittels eines Druckmediums;

- Erhöhung des flächig aufgebrachten relativen Außendrucks;

- Bestimmung des am Außenbereich des Wickelkerns flächig anliegenden Außendrucks;

- Bestimmung der Verformung des Wickelkerns.

Die Art und Weise der Aufbringung des relativen Außendrucks ist grundsätzlich beliebig. Bezüglich der Fläche des Aufbringens und des Druckmediums wird vollinhaltlich auf obige Ausführungen verwiesen.

Die Art und Weise der Erhöhung des flächig aufgebrachten relativen Außendrucks ist ebenfalls grundsätzlich beliebig. Er kann kontinuierlich, aber auch in diskreten Schritten erhöht werden.

Wann die Druckerhöhung endet ist grundsätzlich beliebig. Beispielsweise kann der Druck erhöht werden solange kein Druckabfall im Inneren des Druckbehälters detektiert wurde, und/oder solange der Wickelkern keine Beschädigung erfährt, und/oder solange ein definierter Druckendwert nicht erreicht wurde.

Die Bestimmung des Außendrucks und der Verformung kann zu beliebigen Zeitpunkten vor, während oder nach einer Erhöhung des flächig aufgebrachten relativen Außendrucks erfolgen, kann aber auch kontinuierlich während der Erhöhung des Außendrucks erfolgen. Dabei ist grundsätzlich beliebig, ob die Bestimmung von Außendruck und Verformung vor, während oder nach Erhöhung des flächig aufgebrachten relativen Außendrucks gestartet bzw. beendet wird.

Die Reihenfolge der Verfahrensschritte spielt eine nur untergeordnete Rolle. Die Verfahrensschritte können ausgetauscht und in einer anderen beliebigen Reihenfolge angeordnet werden.

Die Art und Weise der Bestimmung der Verformung ist grundsätzlich beliebig. In einer besonders vorteilhaften Ausführungsform wird die Verformung mittelbar oder unmittelbar über den Durchmesser und/oder über eine Veränderung des Durchmessers an zumindest einer Stelle im Wickelkern bestimmt.

In einer weiteren vorteilhaften Ausführungsform kann die Verformung mittelbar oder unmittelbar über eine Veränderung der Länge des Wickelkerns (01) in seiner axialen Richtung bestimmt werden. Eine derartige Längenänderung kann beispielsweise durch eine Druckbeaufschlagung des Wickelkerns entstehen.

Bezüglich der Bestimmung des am Außenbereich des Wickelkerns flächig anliegenden Außendrucks und der Bestimmung der Verformung des Wickelkerns wird ebenfalls vollinhaltlich auf obige Ausführungen verwiesen.

In einer weiteren vorteilhaften Ausführungsform wird die Verformung in Abhängigkeit vom Außendruck bestimmt und/oder dargestellt.

Als Ergebnis der Prüfung können beispielsweise ein Diagramm oder die zur Erstellung eines derartigen Diagramms erforderlichen Daten ausgegeben werden, wobei diese Daten bzw. das Diagramm zumindest den Innendurchmesser des Wickelkerns in Abhängigkeit vom Außendruck oder umgekehrt enthalten.

Die Vorrichtung bzw. das Verfahren sind mit geringem maschinentechnischcm Aufwand bei Produktion, Qualitätssicherung und Wareneingangskontrolle anwendbar.

Eine Ausführungsform der Erfindung ist in den Zeichnungen dargestellt und wird nachfolgend beispielhaft erläutert.

Es zeigen:

**Fig. 1** Scheiteldruckversuch gemäß Stand der Technik an einem Wickelkern im Querschnitt;

**Fig. 2** eine Vorrichtung zur Stabilitätsprüfung von Wickelkernen im Querschnitt.

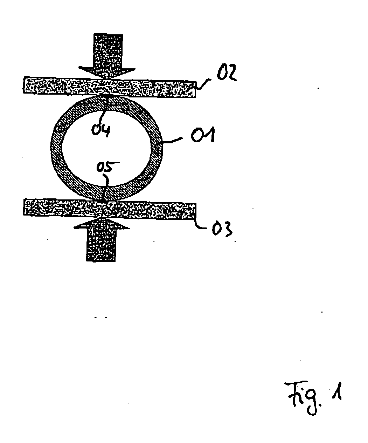

**Fig. 1** zeigt einen Scheiteldruckversuch gemäß Stand der Technik an einem Wickelkern 01 im Querschnitt. Der Wickelkern 01 ist zwischen erster Platte 02 und zweiter Platte 03 angeordnet. Die Platten 02, 03 werden jeweils in Pfeilrichtung auf den Wickelkern 01 gepresst. Die Druckbelastung erfolgt daher an zwei nahezu linienförmigen Kontaktbereichen 04, 05. Die Druckbelastung ist nicht rotationssymmetrisch und drückt den Wickelkern 01 daher ellipsenförmig zusammen. Die größte Beanspruchung erfolgt daher im rechten und linken Bereich des Wickelkerns 01.

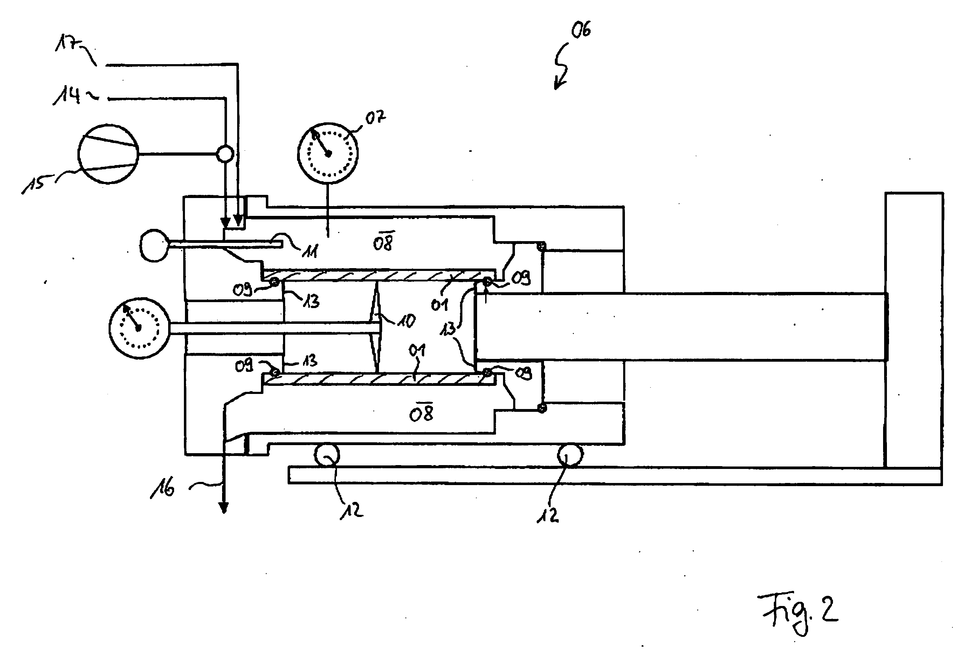

**Fig. 2** zeigt eine Vorrichtung 06 zur Stabilitätsprüfung von Wickelkernen 01 im Querschnitt. Die Vorrichtung 06 zur Stabilitätsprüfung von Wickelkernen 01 weist eine Druckmesseinheit 07 auf, die den Druck im Inneren des Druckbehälters 08 misst. Wickelkern 01 und Druckbehälter 08 sind im Querschnitt dargestellt und müssen sich rotationssymmetrisch als Zylinder vorgestellt werden. Der Wickelkern 01 bildet die innere Wandung des Druckbehälters 08. Um gegen das im Druckbehälter 08 befindliche Druckmedium abzudichten, sind diverse Dichtungen 09 vorgesehen.

Die Verbindung zwischen Wickelkern 01 und Vorrichtung 06 ist derart ausgestaltet, dass sich der Wickelkern 01 in axialer Richtung frei ausdehnen kann und ggf. gemessen werden kann.

Im Inneren des Wickelkerns 01 ist ein Messtaster 10 angeordnet, der den Durchmesser des Wickelkerns 01 kontinuierlich überwacht. Dadurch lassen sich Veränderungen des Durchmessers des Wickelkerns 01 bestimmen. Die Veränderung des Durchmessers des Wickelkerns 01 ist ein Maß für die Verformung des Wickelkerns 01.

Weiterhin weist die Vorrichtung 06 zur Stabilitätsprüfung von Wickelkernen einen Temperatursensor 11 auf, wobei mit dem Temperatursensor 11 die Temperatur des Druckmediums im Druckbehälter 08 bestimmt werden kann.

Die Vorrichtung 06 zur Stabilitätsprüfung von Wickelkernen 01 ist derart ausgestaltet, dass der rechte Bereich der Vorrichtung 06 über das Schlittensystem 12 nach rechts verfahren werden kann. Dadurch wird der Wickelkern 01 freigegeben und kann ausgetauscht werden. Der Druckbehälter 08 öffnet sich dadurch. Ein Wickelkern 01 kann zur Prüfung an der rechten und linken Aufnahme 13 befestigt werden. Nach Befestigung des Wickelkerns 01 an den Aufnahmen 13 wird der rechte Teil der Vorrichtung 06 wieder nach links über den Wickelkern 01 bewegt. Dadurch schließt sich auch der Druckbehälter 08 wieder. Der Druckbehälter 08 wird durch den linken und rechten verfahrbaren Teil der Vorrichtung und den Außenbereich des Wickelkerns 01 gebildet.

Somit kann ein schnelles Auswechseln der Prüfkörper-Wickelkerne 01 erreicht werden, wobei eine geübte Person dies in ca. 120 Sekunden bewältigen können sollte. Weiterhin können die Aufnahmen 13 zur Aufnahme der Wickelkerne austauschbar sein, um die Aufnahme verschiedener Wickelkerne mit verschiedenen Durchmessern gewährleisten zu können. Ein Austauschen dieser Aufnahmen 13 sollte eine geübte Person in unter 300 Sekunden bewältigen können. Eine Aufnahme 13 sollte eine Innendurchmessertoleranz von 2 mm ausgleichen können und dabei noch dicht sein.

In einer weiteren Ausführungsform kann ein auf die erforderliche Länge zugeschnittener Wickelkern 01 auf einen Aufnahmedorn aufgeschoben werden. Der Durchmesser des Aufnahmedorns sollte so auf den Innendurchmesser des Prüfkörpers abgestimmt sein, dass eine Dichtheit erreicht wird. Anschließend kann der zweite Aufnahmedorn in den Prüfkörper eingefahren werden. Dieser Vorgang kann kraftbetätigt erfolgen.

Das Befüllen des Druckbehälters 08 erfolgt in einem ersten Schritt druckarm in ca. 1 Minute sehr schnell. Dazu weist die Vorrichtung 06 eine Brauchwasserzuführung 14 auf. Vorhandene Luft sollte aus dem Druckbehälter 08 entweichen können. Ist der Druckbehälter 08 gefüllt, so kann ein derartiger Luftauslass geschlossen werden. Die weitere Druckerzeugung wird mittels einer Hochdruckpumpe 15 bewirkt. Nun wird die Messdatenerfassung aktiviert, wobei Verformung, Druck und Temperatur erfasst werden können. Bei Bedarf kann der Messpunkt der Verformung im Inneren des Wickelkerns 01 verstellt werden.

Zum Schluss des Prüfvorgangs kann, beispielsweise um den Wickelkern 01 auszutauschen, die Vorrichtung 06 wieder geöffnet werden. Dazu ist es erforderlich, den Druck im Druckbehälter 08 zunächst zu verringern, und anschließend das Druckmedium aus dem Druckbehälter 08 über die Ablassleitung 16 abzulassen. Dieser Vorgang kann über Zuführung von Druckluft über die Druckluftzufuhr 17 beschleunigt werden und in ca. 180 Sekunden vollendet sein. Nachdem das Druckmedium aus dem Druckbehälter 08 gewichcn ist, kann der Druckbehälter 08 mittels weiterer Druckluft über die Druckluftzufuhr 17 trocken geblasen werden.

Weiterhin kann die Vorrichtung 06 eine hier nicht dargestellte Auffangwanne unter der Vorrichtung 06 für Leckagen aufweisen. Weiterhin sollte sichergestellt sein, dass Leckagen unter Prüfdruck keinen Fluidstrahl auf den Bediener erzeugen.

**Patentansprüche**

1. Vorrichtung (06) zur Stabilitätsprüfung von Wickelkernen (01) aufweisend einen druckdichten Druckbehälter (08), wobei im Inneren des Druckbehälters (08) ein unter Druck setzbares Druckmedium eingebracht werden kann, und wobei die Vorrichtung (06) eine Druckmesseinheit (07) zur Bestimmung des Innendrucks des Druckbehälters (08) aufweist,

**dadurch gekennzeichnet,**

**dass** in den Druckbehälter (08) zumindest ein Abschnitt des zu prüfenden Wickelkerns (01) eingebracht werden kann, wobei der sich im Druckbehälter (08) befindliche Außenbereich des Wickelkerns (01) relativ zum Innenbereich des Wickelkerns (01) mittels des Druckmediums flächig unter Druck gesetzt werden kann, und wobei die Vorrichtung (06) eine Verformungsmesscinheit (10) zur Bestimmung der Verformung des zu prüfenden Wickelkerns (01) aufweist.

2. Vorrichtung zur Stabilitätsprüfung von Wickelkernen nach Anspruch 1,
   **dadurch gekennzeichnet,**
   **dass** das Druckmedium zumindest ein Fluid aufweist.

3. Vorrichtung zur Stabilitätsprüfung von Wickelkernen nach Anspruch 1 oder 2,
   **dadurch gekennzeichnet,**
   **dass** die Vorrichtung (06) zumindest einen Temperatursensor (11) zur Bestimmung der Temperatur des Druckmediums aufweist.

4. Vorrichtung zur Stabilitätsprüfung von Wickelkernen nach einem der Ansprüche 1 bis 3,
   **dadurch gekennzeichnet,**
   **dass** die Verformungsmesseinheit (10) zur Bestimmung des Durchmessers und/oder zur Bestimmung einer Veränderung des Durchmesscrs an zumindest einer Stelle im Wickelkern (01) geeignet ist.

5. Vorrichtung zur Stabilitätsprüfung von Wickelkernen nach einem der Ansprüche 1 bis 4,
   **dadurch gekennzeichnet,**
   **dass** die Verformungsmesseinheit (10) zumindest einen Messaufnehmer, insbesondere einen Messtaster, umfasst.

6. Vorrichtung zur Stabilitätsprüfung von Wickelkernen nach einem der Ansprüche 1 bis 5,
   **dadurch gekennzeichnet,**
   **dass** die Verformungsmesseinheit (10) zumindest ein Lasersystem umfasst.

7. Vorrichtung zur Stabilitätsprüfung von Wickelkernen nach einem der Ansprüche 1 bis 6,
   **dadurch gekennzeichnet,**
   **dass** der Druckbehälter (08) in Form eines mit einer zylindrischen Ausnehmung versehenen Hohlzylinders ausgebildet ist, wobei zumindest ein Abschnitt des Wickelkerns (01) in die zylindrische Ausnehmung eingebracht werden kann, und wobei der Außenbereich zumindest eines Abschnittes des Wickelkerns (01) die innere Begrenzung des Druckbehälters (08) bildet.

8. Vorrichtung zur Stabilitätsprüfung von Wickelkernen nach einem der Ansprüche 1 bis 7,
   **dadurch gekennzeichnet,**
   **dass** der Wickelkern (01) zumindest an einer Seite in axialer Richtung beweglich an der Vorrichtung (06) gelagert ist.

9. Verfahren zur Stabilitätsprüfung von Wickelkernen (01) aufweisend zumindest folgende Schritte:

   - Flächiges Aufbringen eines relativen Außendruckes zumindest auf einen Abschnitt des Außenbereiches des zu prüfenden Wickelkerns (01) mittels eines Druckmediums,
   - Erhöhung des flächig aufgebrachten relativen Außendruckes,
   - Bestimmung des am Außenbereich des Wickelkerns (01) flächig anliegenden Außendruckes,
   - Bestimmung der Verformung des Wickelkerns (01).

10. Verfahren zur Stabilitätsprüfung von Wickelkernen nach Anspruch 9,
    **dadurch gekennzeichnet,**
    **dass** die Verformung mittelbar oder unmittelbar über den Durchmesser und/oder über eine Veränderung des Durchmessers an zumindest einer Stelle im Wickelkern (01) bestimmt wird.

11. Verfahren zur Stabilitätsprüfung von Wickelkernen nach Anspruch 9 oder 10,
    **dadurch gekennzeichnet,**
    **dass** die Verformung mittelbar oder unmittelbar über eine Veränderung der Länge des Wickelkerns (01) in seiner axialen Richtung bestimmt wird.

12. Verfahren zur Stabilitätsprüfung von Wickelkernen nach einem der Ansprüche 9 bis 11,
    **dadurch gekennzeichnet,**
    **dass** die Verformung in Abhängigkeit vom Außendruck bestimmt und/oder dargestellt wird.

**Claims**

1. Device (06) for testing the stability of winding cores (01), said device exhibiting a pressure-tight pressure vessel (08), wherein a pressure medium which can be pressurized can be introduced into the interior of the pressure vessel (08), and wherein the device (06) exhibits a pressure measuring unit (07) for determining the internal pressure of the pressure vessel (08), **characterized in that**

   at least one section of the winding core (01) to be tested can be introduced into the pressure vessel (08), wherein the outer region of the winding core (01) which is located inside the pressure vessel (08) can be planarly pressurized relative to the inner region of the winding core (01) using the pressure medium, and wherein the device (06) exhibits a deformation measuring unit (10) for determining the deformation of the winding core (01) to be tested.

2. Device for testing the stability of winding cores according to claim 1,
**characterized in that**
the pressure medium exhibits at least one fluid.

3. Device for testing the stability of winding cores according to claim 1 or 2,
**characterized in that**
the device (06) exhibits at least one temperature sensor (11) for determining the temperature of the pressure medium.

4. Device for testing the stability of winding cores according to any of claims 1 to 3,
**characterized in that**
the deformation measuring unit (10) is adapted for determining the diameter and/or for determining a variation of the diameter at at least one location inside the winding core (01).

5. Device for testing the stability of winding cores according to any of claims 1 to 4,
**characterized in that**
the deformation measuring unit (10) comprises at least one sensor, in particular a measuring sensor.

6. Device for testing the stability of winding cores according to any of claims 1 to 5,
**characterized in that**
the deformation measuring unit (10) comprises at least one laser system.

7. Device for testing the stability of winding cores according to any of claims 1 to 6,
**characterized in that**
the pressure vessel (08) is designed in the form of a hollow cylinder which is provided with a cylindrical recess, wherein at least one section of the winding core (01) can be introduced into said cylindrical recess, and wherein the outer region of at least one section of the winding core (01) forms the inner boundary of the pressure vessel (08).

8. Device for testing the stability of winding cores according to any of claims 1 to 7,
**characterized in that**
the winding core (01) is movably mounted at the device (06) in an axial direction at at least one side thereof.

9. Method for testing the stability of winding cores (01), the method comprising at least the following steps of:

- planarly applying a relative external pressure onto at least one section of the outer region of the winding core (01) to be tested using a pressure medium,
- increasing the planarly applied relative external pressure,
- determining the external pressure planarly applied to the outer region of the winding core (01),
- determining the deformation of the winding core (01).

10. Method for testing the stability of winding cores according to claim 9,
**characterized in that**
the deformation is directly or indirectly determined by means of the diameter and/or by means of a variation of the diameter at at least one location inside the winding core (01).

11. Method for testing the stability of winding cores according to claim 9 or 10,
**characterized in that**
the deformation is directly or indirectly determined by means of a variation of the length of the winding core (01) in the axial direction thereof.

12. Method for testing the stability of winding cores according to any of claims 9 to 11,
**characterized in that**
the deformation is determined and/or represented as a function of the external pressure.

## Revendications

1. Dispositif (06) pour tester la stabilité de noyaux d'enroulement (01), ledit dispositif présentant un réservoir sous pression (08) qui est étanche à la pression, dans lequel un médium de pression pouvant être pressurisé peut être inséré à l'intérieur du réservoir sous pression (08), le dispositif (06) présentant une unité de mesure de pression (07) pour déterminer la pression intérieure du réservoir sous pression (08),
**caractérisé en ce qu'**
au moins une section du noyau d'enroulement (01) à tester peut être insérée dans le réservoir sous pression (08), la région extérieure du noyau d'enroulement (01) qui est disposée à l'intérieur du réservoir sous pression (08) pouvant être pressurisée de façon plane par rapport à la région intérieure du noyau d'enroulement (01) au moyen du médium de pression, le dispositif présentant une unité de mesure de la déformation (10) pour déterminer la déformation du noyau d'enroulement (01) à tester.

2. Dispositif pour tester la stabilité de noyaux d'enroulement selon la revendication 1,
**caractérisé en ce que**

le médium de pression présente au moins un fluide.

**3.** Dispositif pour tester la stabilité de noyaux d'enroulement selon la revendication 1 ou 2,
**caractérisé en ce que**
le dispositif (06) présente au moins un capteur de température (11) pour déterminer la température du médium de pression.

**4.** Dispositif pour tester la stabilité de noyaux d'enroulement selon l'une quelconque des revendications 1 à 3,
**caractérisé en ce que**
l'unité de mesure de la déformation (10) est apte à déterminer le diamètre et/ou une variation du diamètre à au moins un lieu à l'intérieur du noyau d'enroulement (01).

**5.** Dispositif pour tester la stabilité de noyaux d'enroulement selon l'une quelconque des revendications 1 à 4,
**caractérisé en ce que**
l'unité de mesure de la déformation (10) comprend au moins un capteur, en particulier un capteur de mesure.

**6.** Dispositif pour tester la stabilité de noyaux d'enroulement selon l'une quelconque des revendications 1 à 5,
**caractérisé en ce que**
l'unité de mesure de la déformation (10) comprend au moins un système de laser.

**7.** Dispositif pour tester la stabilité de noyaux d'enroulement selon l'une quelconque des revendications 1 à 6,
**caractérisé en ce que**
le réservoir sous pression (08) est conçu sous forme d'un cylindre creux présentant un évidement cylindrique, au moins une section du noyau d'enroulement (01) pouvant être insérée dans ledit évidement cylindrique, la région extérieure d'au moins une section du noyau d'enroulement (01) formant la limite intérieure du réservoir sous pression (08).

**8.** Dispositif pour tester la stabilité de noyaux d'enroulement selon l'une quelconque des revendications 1 à 7,
**caractérisé en ce que**
le noyau d'enroulement (01) est monté de façon mobile au dispositif (06) dans une direction axiale à au moins un côté de celui-ci.

**9.** Procédé pour tester la stabilité de noyaux d'enroulement (01), ledit procédé comprenant au moins les étapes suivants:

- appliquer de façon plane une pression extérieure relative sur au moins une section de la région extérieure du noyau d'enroulement (01) à tester au moyen d'un médium de pression,
- augmenter la pression extérieure appliquée de façon plane,
- déterminer la pression extérieure appliqué de façon plane à la région extérieure du noyau d'enroulement (01),
- déterminer la déformation du noyau d'enroulement (01).

**10.** Procédé pour tester la stabilité de noyaux d'enroulement selon la revendication 9,
**caractérisé en ce que**
la déformation est directement ou indirectement déterminée au moyen du diamètre et/ou au moyen d'une variation du diamètre à au moins un lieu à l'intérieur du noyau d'enroulement (01).

**11.** Procédé pour tester la stabilité de noyaux d'enroulement selon la revendication 9,
**caractérisé en ce que**
la déformation est directement ou indirectement déterminée au moyen d'une variation de la longueur du noyau d'enroulement (01) dans la direction axiale de celui-ci.

**12.** Procédé pour tester la stabilité de noyaux d'enroulement selon l'une quelconque des revendications 9 à 11,
**caractérisé en ce que**
la déformation est déterminée et/ou représentée en fonction de la pression extérieure.

Fig. 1

Fig. 2

EP 1 855 097 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2754677 A
- FR 2641868
- EP 0605109 A1
- DE 2027727